Europäisches Patentamt

European Patent Office

Office européen des brevets

(11) Veröffentlichungsnummer: **0 282 943 B1**

(12) **EUROPÄISCHE PATENTSCHRIFT**

(45) Veröffentlichungstag der Patentschrift: **22.04.92**

(21) Anmeldenummer: **88103985.3**

(22) Anmeldetag: **14.03.88**

(51) Int. Cl.⁵: **B03B 9/06**, B07B 9/00

(54) Verfahren und Vorrichtung zur Wiedergewinnung von Glas aus Altglas.

(30) Priorität: **20.03.87 DE 3709179**

(43) Veröffentlichungstag der Anmeldung:
**21.09.88 Patentblatt 88/38**

(45) Bekanntmachung des Hinweises auf die
Patenterteilung:
**22.04.92 Patentblatt 92/17**

(84) Benannte Vertragsstaaten:
**AT BE CH DE ES FR GB IT LI NL SE**

(56) Entgegenhaltungen:
**FR-A- 2 413 130**

**VERRES ET REFRACTAIRES, Band 32, Nr. 2,
MÄrz-April 1978, Seiten 204-206, Paris, FR; H.
MOSER: "Installation de traitement du verre
de récupération"**

(73) Patentinhaber: **BETEILIGUNGEN SORG GMBH
& CO. KG
Postfach 520, Stoltestrasse 23
W-8770 Lohr am Main(DE)**

(72) Erfinder: **Waltert, Erich
Gartenstrasse 31
W-8771 Erlenbach(DE)**

(74) Vertreter: **Zapfe, Hans, Dipl.-Ing.
Am Eichwald 7, Postfach 20 01 51
W-6056 Heusenstamm 2 (Rembrücken)(DE)**

**Beschreibung**

Die Erfindung betrifft ein Verfahren zur Wiedergewinnung von Glas aus Altglas durch kontinuierliche Aufgabe des Altglases in ausgebreitetem Zustand auf eine nach oben offene, kontinuierlich laufende Fördereinrichtung, durch manuelles und mechanisches Aussondern von glasfremden Verunreinigungen wie Eisen- und Nichteisenmetallen sowie von nichtmetallischen Beimengungen, durch mechanisches Zerkleinern von Altglas in einer Brechvorrichtung und gegebenenfalls Klassierung nach Scherbengröße.

Das Verfahrensprodukt, eine Scherbenmasse mit einem gewissen Größenspektrum der Einzelscherben, dient später als Chargiermaterial für Glasschmelzöfen zur Erzeugung von neuen Glasgegenständen.

Das Recycling von Glas hat in den letzten Jahren ständig an Bedeutung gewonnen. Die Sammlung von Altglas hat sich in weitesten Bevölkerungskreisen durchgesetzt, nachdem erkannt wurde, daß das Altglas nicht nur als Abfall, sondern vornehmlich auch als Rohstoff für die Produktion neuen Glases anzusehen ist. Problematisch sind dabei allerdings die glasfremden Bestandteile, zu denen metallische Verschlüsse oder Verschlußteile und keramische Verschlüsse ebenso gehören wir organische Verunreinigungen, darunter Kunststoffteile, Etiketten, Holzstücke, Steine und willkürlich in die Glasbehälter eingeworfene Fremdkörper aller Art. Sofern nur Altglas einer bestimmten Farbe benötigt wird, sind auch Glasteile anderer Farbe bereits als glasfremde Bestandteile anzusehen, die zusammen mit den anderen unerwünschten Bestandteilen entfernt werden müssen, um überhaupt Neuglas mit den gewünschten Qualitätseigenschaften erzeugen zu können.

Das Altglas wird dabei in der Regel als Gemisch sehr unterschiedlicher Teilegrößen angeliefert. Allein die Teilegrößen reichen von kleineren Splittern über größere Bruchstücke wie beispielsweise Flaschenböden bis hin zu ganzen Flaschen. Besonders unangenehm sind dabei Flaschen bestimmter Bauweise, bei denen ein aus Keramik bestehender Verschluß mit einem Gummiring über einen Bügelmechanismus aus Stahldraht mit dem Flaschenhals verbunden ist. Die Verschlußteile lassen sich dabei nur schwer aus dem Scherbengemisch entfernen.

Bei einem bekannten Verfahren der eingangs beschriebenen Gattung wird das angelieferte Scherbengemisch über eine Dosier-Förderrinne auf einer Fördereinrichtung in Form eines Förderbandes ausgebreitet und zunächst einem Magnetabscheider und danach einer visuellen Beobachtungsstation zugeführt, in der das Bedienungspersonal den Durchlauf des gesamten Scherbengemischs überwacht und hierbei Verunreinigungen sowie Glasteile mit falscher Farbe von Hand aussortiert. Diese Tätigkeit ist nicht nur sehr ermüdend und führt mit fortschreitender Dauer zu Fehlern, sie begrenzt auch in starkem Maße den Durchsatz. Hinzu kommt, daß durch die unterschiedliche Größe der Glasteile Verunreinigungen teilweise verdeckt durch die Beobachtungsstation transportiert werden, so daß sie notwendigerweise unentdeckt bleiben.

Bei den bekannten Verfahren wird die gesamte Scherbenmasse einschließlich der nicht entdeckten Verunreinigungen einer Brechvorrichtung, einem sogenannten "Scherbenbrecher" zugeführt. Hierbei werden unvermeidbar kleinere, an sich gut geeignete Scherben nochmals zerkleinert, und zwar insbesondere aufgrund der Anwesenheit größerer Glasteile. Dadurch werden für den Antrieb des Scherbenbrechers größere Energiemengen benötigt, als unbedingt erforderlich. Durch nachgeschaltete Abscheidestationen, die mit magnetischen Einrichtungen, Saugdüsen oder dergleichen ausgestattet sein können, werden hierbei weitere Verunreinigungen aus Eisen- und Nichteisenmetallen sowie aus organischen Stoffen ausgesondert, wobei sich die nunmehr vorhandenen kleinen Glassplitter und die insgesamt durchgesetzte große Glasmenge als hinderlich erweisen. Insbesondere kann die Saugleistung der Saugdüsen nicht auf einen optimalen Wert eingestellt werden, weil hierdurch die feinen Glasteilchen mitgerissen würden.

Außer einem hohen spezifischen Energiebedarf haben die für das bekannte Verfahren benötigten Vorrichtungsteile ein verhältnismäßig großes Bauvolumen. Sie bedingen daher hohe Investitions- und Betriebskosten, und zwar sowohl für die Vorrichtung, als auch für den zugehörigen Gebäudekomplex.

Der vorliegenden Erfindung liegt daher die Aufgabe zugrunde, das Ausmaß der Beobachtung zu verringern, die visuelle Beobachtung zu erleichtern, das Größenverteilungsspektrum der Scherben einzuengen und die Antriebsleistung pro Gewichtseinheit durchgesetzten Altglases abzusenken.

Die Lösung der gestellten Aufgabe erfolgt bei dem eingangs beschriebenen Verfahren erfindungsgemäß dadurch, daß man mindestens vor dem manuellen Aussondern und vor dem Zerkleinern in der Brechvorrichtung in einer Trennvorrichtung eine Klassierung des Altglases in mindestens zwei Fraktionen unterschiedlicher Teilegrößen vornimmt und

a) ausschließlich das Altglas der mindestens einen gröberen Fraktion ("Grobglas") nach dem Aussondern mindestens eines Teils der glasfremden Verunreinigungen der Brechvorrichtung zuführt und anschliessend das auf die gewünschte Scherbengröße zerkleinerte Altglas mindestens einer mechanischen Trennvorrichtung für das Aussondern restlicher metallischer Verunreinigungen und schließlich einer Lagerstelle für Gutglas zuführt und

b) das Altglas der mindestens einen feineren Fraktion ("Feinglas") nach dem Aussondern mindestens eines Teils der glasfremden Verunreinigungen ohne weiteren Brechvorgang einer mechanischen Trennvorrichtung für das Aussondern restlicher metallischer Verunreinigungen und schließlich einer Lagerstelle für Gutglas zuführt.

Es werden also im Prinzip durch eine Trennvorrichtung mindestens zwei Fraktionen mit unterschiedlichen Teilegrößenspektra erzeugt und getrennt voneinander aber parallel zueinander aufgearbeitet, wobei das Teilegrößenspektrum der gröberen Fraktion, also des "Grobglases" im Verlaufe der Aufbereitung in einer Brechvorrichtung dem Teilegrößenspektrum der feineren Fraktion, also dem "Feinglas", sehr weitgehend angepaßt wird. Dadurch wird insbesondere vermieden, daß die bereits vorhandene feinere Fraktion des Altglases einem nochmaligen Brechvorgang zugeführt wird.

Es wird bereits ein beträchtlicher Vorteil dadurch erreicht, daß man das angelieferte Altglas in nur zwei Fraktionen mit unterschiedlichen Teilegrößen unterteilt. Man kann die Unterteilung jedoch auch in vier Fraktionen durchführen, die sich wie folgt definieren lassen: "grob" - "weniger grob" - "weniger fein" - "fein". Auch hierbei ist es ausreichend, wenn man ausschließlich das Altglas der gröbsten Fraktion der Brechvorrichtung zuführt.

Mit der Erfindung sind folgende Vorteile verbunden:

- das Altglas, das während des Rückführprozesses bereits unkontrolliert zerkleinert wurde, bleibt in diesem Zustand.
- Die für das Grobglas einzusetzende Brechvorrichtung kann mit wesentlich verringerter Leistung betrieben werden. Dadurch werden die Investitions-und Betriebskosten erheblich reduziert.
- Das in der Beobachtungsstation benötigte Personal, das sogenannte "Lesepersonal" wird erheblich entlastet, da dieses Personal nur noch einen genau definierten Fraktionsbereich verlesen muß. Dadurch kann einerseits eine Leistungssteigerung erreicht werden, andererseits wird der Lärmpegel in der Beobachtungsstation, im "Lesebereich", durch Unterbringung in einer Schallschutzkabine, wesentlich abgesenkt.
- Die benötigte Grundfläche für die Errichtung einer Anlage für das erfindungsgemäße Verfahren ist bei vergleichbarer Durchsatzleistung wesentlich kleiner.

- Die Installation einer Klimaanlage kann auf den "Leseraum" beschränkt werden.
- Aufgrund einer wesentlich genauer definierten Scherbengröße in jedem parallelen Verfahrenszweig kann die jeweilige Absaugleistung der Saugdüse optimal eingestellt werden. Dies bedeutet eine bessere Reinheit der Scherbenmasse ohne nennenswerte Glasverluste durch eine übermässige Sogwirkung. Durch Verringerung der Saugleistung und/oder Verlagerung der Absauganlage aus der Schallschutzkabine heraus kann weiterhin erreicht werden, daß sie teure Heizenergie entweder gar nicht bzw. nur noch in wesentlich verringertem Maße nach außen transportieren kann.

Die Erfindung betrifft auch eine Vorrichtung zur Durchführung des eingangs beschriebenen Verfahrens. Diese Vorrichtung besitzt in herkömmlicher Weise mindestens eine kontinuierlich antreibbare, nach oben offene Fördereinrichtung, die durch mindestens eine Beobachtungsstation zum manuellen Aussondern von glasfremden Bestandteilen hindurchgeführt ist, ferner mechanische Abscheidestationen für glasfremde Verunreinigungen wie Eisen-und Nichteisenmetalle sowie für nichtmetallische Beimengungen, weiterhin eine Brechvorrichtung für das mechanische Zerkleinern von Altglas und schließlich, falls erforderlich, auch eine Klassierungsvorrichtung.

Zur Lösung im wesentlichen der gleichen Aufgabe ist eine solche Vorrichtung erfindungsgemäß dadurch gekennzeichnet, daß der mindestens einen Fördereinrichtung mit der zugehörigen Beobachtungsstation eine Trennvorrichtung zur Klassierung des Altglases in mindestens zwei Fraktionen unterschiedlicher Teilegrößen vorgeschaltet ist, wobei

a) der Ausgang der Trennvorrichtung für die mindestens eine gröbere Fraktion ("Grobglas") mit der nach oben offenen Fördereinrichtung mit zugehöriger Beobachtungsstation verbunden ist, und das Abwurfende der Fördereinrichtung der Brechvorrichtung zugeordnet ist, deren Austragsöffnung ihrerseits mit mindestens einer mechanischen Trennvorrichtung für das Aussondern restlicher metallischer Verunreinigungen verbunden und wobei in Parallelschaltung hierzu

b) der Ausgang der Trennvorrichtung für die mindestens eine feinere Fraktion ("Feinglas") mit einer weiteren, nach oben offenen Fördereinrichtung mit zugehöriger Förderstation verbunden ist, und das Abwurfende der weiteren Fördereinrichtung mit mindestens einer weiteren mechanischen Trennvorrichtung für das Aussondern restlicher metallischer Verunreinigungen verbunden ist.

Es ist dabei besonders vorteilhaft, wenn von einem Vorratsbehälter für das angelieferte Altglas ein Senkrechtförderer zu der Trennvorrichtung für die Klassierung des Altglases in die mindestens zwei Franktionen unterschiedlicher Teilegröße ("Grobglas" und "Feinglas") geführt ist, wenn die besagte Trennvorrichtung als mehrstufiges Schwingsieb ausgeführt ist und wenn die Ausgänge der Trennvorrichtung in Parallelschaltung über Überleitrutschen mit den im Niveau darunterliegenden, nach oben offenen Fördereinrichtungen verbunden sind.

Die Zuordnung der Überleitrutschen zu den nach oben offenen Fördereinrichtungen kann dabei, wie noch aufgezeigt werden wird, mittelbar oder unmittelbar erfolgen.

Weitere vorteilhafte Ausgestaltungen des Erfindungsgegenstandes ergeben sich aus den übrigen Unteransprüchen.

Ein Ausführungsbeispiel des Erfindungsgegenstandes und seine Wirkungsweise wird nachfolgend anhand der Figuren 1 bis 3 näher erläutert.

Es zeigen:

Figur 1 eine Prinzipdarstellung einer Trennvorrichtung für die Trennung der angelieferten Altglasmasse in insgesamt vier Fraktionen mit nachgeschalteten parallelen Behandlungswegen in Form einer Blockdarstellung,

Figur 2 eine Prinzipdarstellung eines Behandlungsweges für die gröbere bzw. gröbste Fraktion mit einer Brechvorrichtung und

Figur 3 eine Prinzipdarstellung eines Behandlungsweges für die feinere bzw. feinste Fraktion ohne eine Brechvorrichtung.

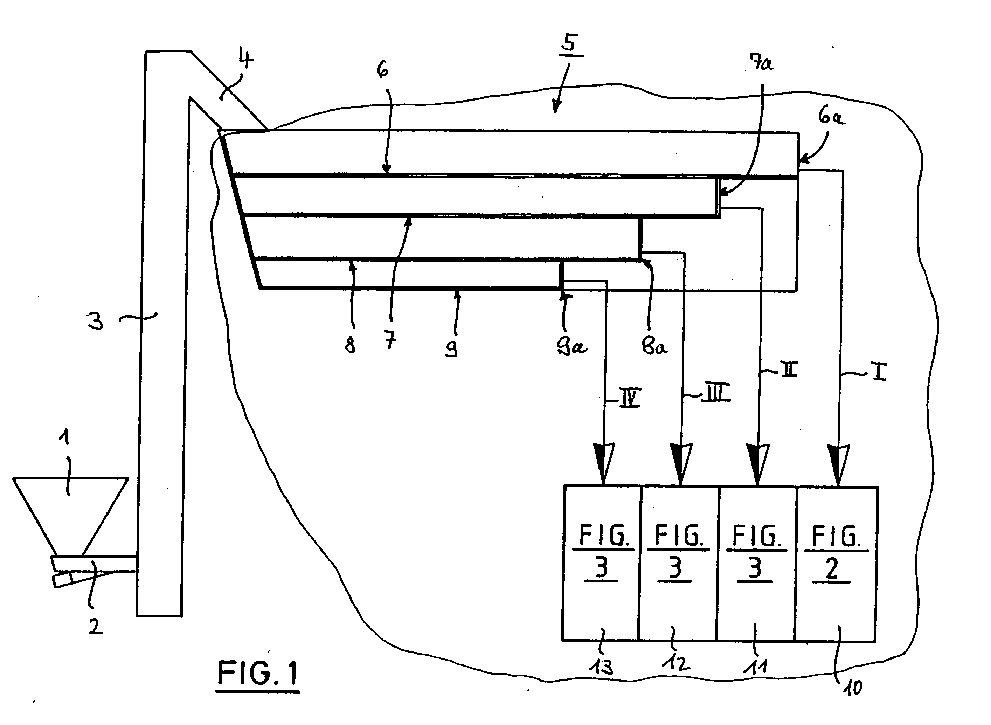

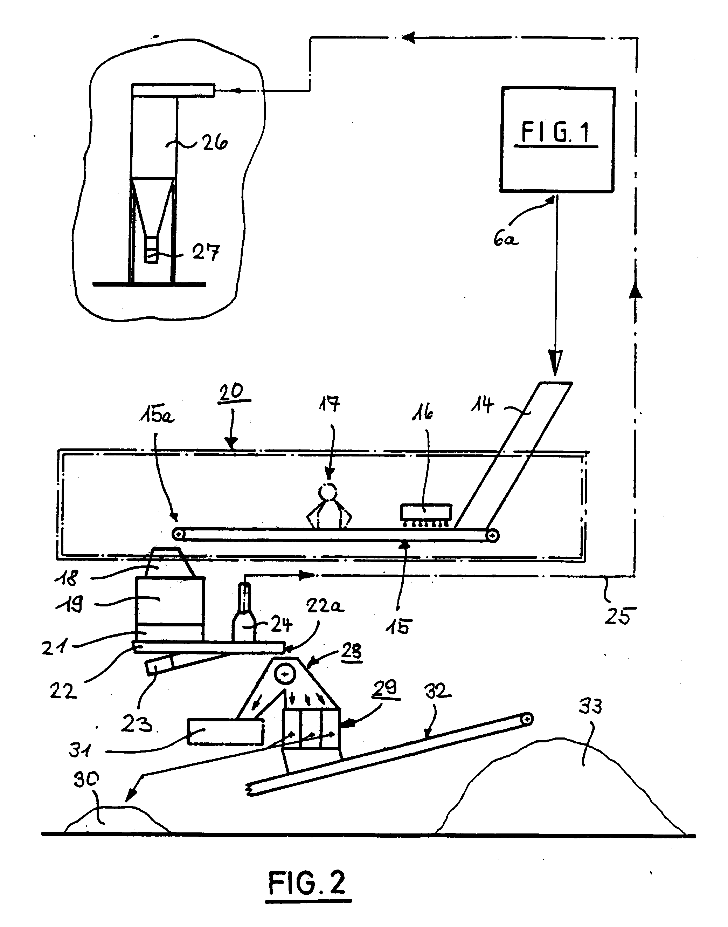

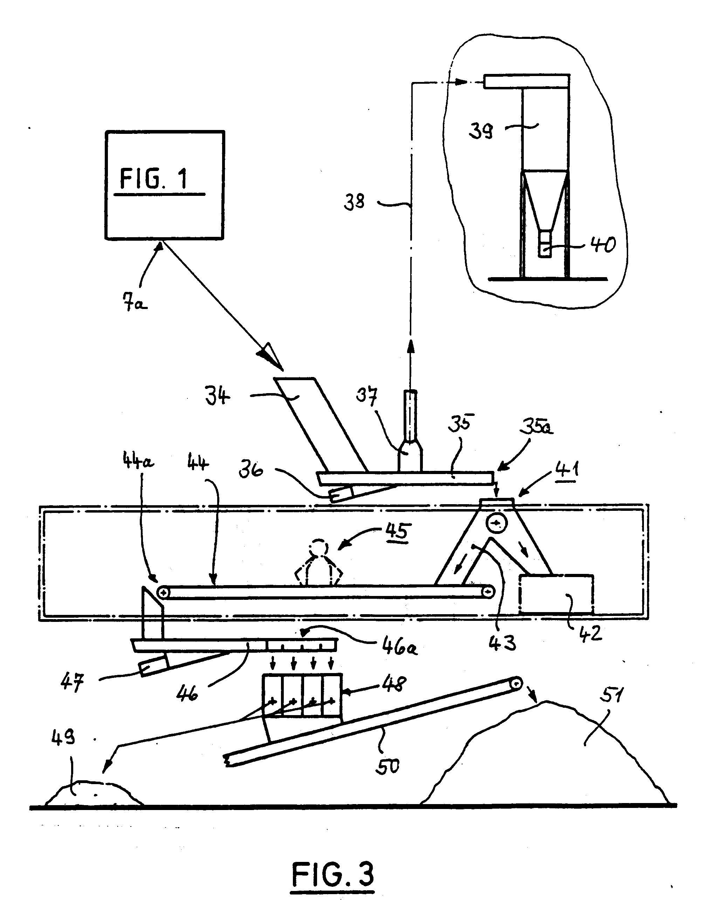

In Figur 1 ist als Chargiervorrichtung 1 ein Einfülltrichter für das angelieferte Altglas dargestellt, von dem eine Dosiervorrichtung 2 in Form einer Vibrations-Förderrinne zu einem Senkrechtförderer 3 führt, der beispielhaft als Elevator oder Becherwerk ausgeführt ist. Von dem Senkrechtförderer 3 führt eine Rutsche 4 zu einer Trennvorrichtung 5, die als mehrstufiges Schwingsieb ausgeführt ist. Zu diesem Zwecke besitzt die Trennvorrichtung 5 drei Siebböden 6, 7 und 8 sowie einen geschlossenen Boden 9. Die gesamte Anordnung wird in bekannter Weise durch einen herkömmlichen Schwingantrieb in Schwingungen versetzt, so daß das als Schüttgut aufgegebene Altglas kontinuierlich vom Bereich der Rutsche 4 nach rechts bis zum Ende des jeweiligen Siebbodens wandert. Die betreffenden Abwurfenden sind mit 6a, 7a und 8a bezeichnet; auch der geschlossene Boden 9 besitzt ein Abwurfende 9a. Die einzelnen Siebböden besitzen nicht näher bezeichnete Öffnungen, deren Querschnitt von oben nach unten, d.h. vom Siebboden 6 zum Siebboden 8 abnimmt. Dadurch werden insgesamt vier Fraktionen I, II, III und IV an unterschiedlichen Scherbengrößen erzeugt, die über die betreffenden Abwurfenden nach unten gelangen und parallel bzw. gleichzeitig den Behandlungswegen 10, 11, 12 und 13 zugeführt werden, deren Einzelheiten in den Figuren 2 und 3 näher erläutert werden.

Die Querschnitte der Öffnungen in den einzelnen Siebböden werden nach Maßgabe von Einzelheiten des Anwendungsfalles festgelegt. Bei kleineren Anlagen mit entsprechend kleinen Leistungen kann es zweckmäßig sein, nur die Behandlungswege I und II vorzusehen, so daß an die Stelle des Siebbodens 7 ein geschlossener Boden tritt.

In Figur 2 ist der Behandlungsweg 10 gemäß Figur 1 im Detail dargestellt. Vom Abwurfende 6a gelangt die gröbste Fraktion I des Altglases zunächst auf eine Überleitrutsche 14 und von dort auf eine nach oben offene Transporteinrichtung 15, die als flach geführtes Förderband ausgebildet ist. Die Transporteinrichtung 15 verläuft unterhalb eines Magnetabscheiders 16, durch den Teile aus ferromagnetischen Werkstoffen aus der Scherbenmasse entfernt werden. Nachfolgend verläuft die Transporteinrichtung 15 durch eine Beobachtungsstation 17 hindurch, die hier durch eine Überwachungsperson symbolisiert wird. Diese Überwachungsperson entfernt z.B. Keramikteile, Holz oder sonstige große Fremdteile und sortiert gegebenenfalls auch andersfarbiges Glas aus. Die Transporteinrichtung 15 besitzt ein Abwurfende 15a, das oberhalb einer Chargieröffnung 18 einer Brechvorrichtung 19 liegt. Die Umgebung der Transporteinrichtung 15 und der zugehörigen Beobachtungsstation 17 bildet einen sogenannten "Leseraum" 20.

Die Brechvorrichtung 19 besitzt weiterhin eine Austragsöffnung 21, die einer Transportrinne 22 mit einem Schwingförderantrieb 23 zugeordnet ist. Durch diesen Antrieb wird das vorgereinigte und nunmehr gebrochene Altglas in Richtung auf das Abwurfende 22a transportiert. Auf diesem Wege befindet sich eine Saugdüse 24, die über eine Saugleitung 25 mit einem Abscheider 26 verbunden ist, der als Zyklon-Abscheider ausgebildet ist und eine Schleuse 27 besitzt, um abgesaugtes Material auszutragen.

Das Abwurfende 22a der Transportrinne 22 ist einem weiteren Magnetabscheider 28 und einer weiteren Abscheidestation 29 zugeordnet, in der die aus dem Magnetabscheider 28 kommende Scherbenmasse von Restmetallen befreit wird, die einer Metalllagerstelle 30 zugeführt werden. Bei diesen Restmetallen kann es sich sowohl um Eisen- als auch um Nichteisenmetalle handeln, die bisher nicht erfaßt wurden. Die entsprechende Abscheidestation ist - für sich genommen - Stand der Technik. Ihre einzelnen Kammern verlaufen in Wirklichkeit senkrecht zur Zeichenebene. Die von dem Magnetabscheider 28 aus dem Scherbenstrom gezogenen ferromagnetischen Teile werden einem Sammelbehälter 31 zugeführt. Von der Abscheidestation 29 führt eine weitere Transporteinrichtung 32 zu einer Lagerstelle 33 für Gutglas, d.h. für solches Glas, das für den Aufschmelzprozeß geeignet ist.

Die Saugdüse 24 ist in ihrer Höhe über der Transportrinne 22 verstellbar, um die Saugwirkung zu optimieren.

In Figur 3 ist gezeigt, daß der Ausgang der Trennvorrichtung 5 bzw. deren Abwurfende 7a mit einer Überleitrutsche 34 zusammenwirkt, die mit einer Transportrinne 35 verbunden ist, die gleichfalls mit einem Schwingförderantrieb 36 ausgestattet ist. Dadurch wird die Scherbenmasse von der Überleitrutsche 34 bis zum Abwurfende 35a der Transportrinne 35 gefördert. Auf diesem Wege befindet sich eine Saugdüse 37 mit analoger Funktion und Höhenverstellbarkeit wie die Saugdüse 34 in Figur 2. Die Saugdüse 37 ist über eine Saugleitung 38 mit einem Abscheider 39 verbunden, der gleichfalls als Zyklon-Abscheider ausgebildet ist und eine Schleuse 40 für den Austrag der abgesaugten Verunreinigungen besitzt.

Das Abwurfende 35a wirkt mit einem weiteren Magnetabscheider 41 zusammen, durch den ferromagnetische Partikel aus dem Scherbenstrom abgezogen und einem Sammelbehälter 42 zugeführt werden. Der Magnetabscheider 41 besitzt einen weiteren Ausgang 43 für den Feinglas-Scherbenstrom, der mit einer nach oben offenen Transporteinrichtung 44 zusammenwirkt, die gleichfalls als eben geführtes Transportband ausgebildet ist. Das obere Trumm führt vom Ausgang 43 an einer Beobachtungsstation 45 vorbei, die auch hier durch "Lesepersonal" symbolisiert ist, bis zu einem Abwurfende 44a.

Das Abwurfende 44a dieser Transporteinrichtung ist einer weiteren Transportrinne 46 zugeordnet, die einen Schwingförderantrieb 47 aufweist. Die Transportrinne 46 besitzt gleichfalls ein Abwurfende 46a, das eine Verteileinrichtung besitzt, die den Scherbenstrom quer zur Transportrichtung gleichmäßig in Einzelströme aufteilt, so daß der Scherbenstrom in gleichmäßiger Verteilung den Kammern einer Abscheidestation 48 zugeführt wird, in der aus dem Scherbenstrom Restmetalle abgezogen werden, die nachfolgend einer Metall-Lagerstelle 49 zugeführt werden. Die einzelnen Kammern der Abscheidestation liegen auch hier in Wirklichkeit senkrecht zur Zeichenebene hintereinander. Von der Abscheidestation 48 führt wiederum eine weitere Transporteinrichtung 50 in Form eines Förderbandes zu einer Lagerstelle 51 für weiteres Gutglas. Die Funktionen übereinstimmender Bauelemente in den Figuren 2 und 3 stimmen sehr weitgehend überein.

Die Behandlungswege III und IV haben im wesentlichen den gleichen Aufbau wie der Behandlungsweg II gemäß Figur 3. Allerdings kann der letzte Behandlungsweg für die in der Partikelgröße feinste Fraktion, im vorliegenden Fall der Behandlungsweg IV, gegebenenfalls vereinfacht werden. So ist es möglich, den sehr feinen Scherbenstrom ohne weitere Abscheidestationen und/oder eine manuelle Aussonderung, d.h. auch ohne nach oben offene Transporteinrichtung und damit ohne Beobachtungsstation auszuführen. Alternativ kann auch nur eine der bereits beschriebenen Trennfunktionen ausgeführt werden, d.h. es kann entweder nur ein Magnetabscheider, eine manuelle Aussonderung, eine Absaugung oder nur eine Abscheidestation für Nichteisen-Metalle vorgesehen werden. Falls nämlich die letzte und damit sehr feine Fraktion eine bestimmte Partikelgröße unterschreitet, kann davon ausgegangen werden, daß die in den betreffenden Abscheidestationen erfaßbaren Verunreinigungen bzw. Fremdkörper eine deutlich größere Partikelgröße aufweisen, so daß sie schon mit der nächst gröberen Fraktion zurückgehalten bzw. in dem betreffenden Behandlungsweg ausgeschieden worden sind.

Die Abscheider 26 und 39 müssen keine getrennten Aggregate sein; sie können auch durch einen einzigen Abscheider ersetzt werden.

## Patentansprüche

1. Verfahren zur Wiedergewinnung von Glas aus Altglas durch kontinuierliche Aufgabe des Altglases in ausgebreitetem Zustand auf eine nach oben offene, kontinuierlich laufende Fördereinrichtung, durch manuelles und mechanisches Aussondern von glasfremden Verunreinigungen wie Eisen- und Nichteisenmetallen sowie von nichtmetallischen Beimengungen, durch mechanisches Zerkleinern von Altglas in einer Brechvorrichtung und gegebenenfalls Klassierung nach Scherbengröße, dadurch gekennzeichnet, daß man mindestens vor dem manuellen Aussondern und vor dem Zerkleinern in der Brechvorrichtung in einer Trennvorrichtung eine Klassierung des Altglases in mindestens zwei Fraktionen unterschiedlicher Teilegrößen vornimmt und

   a) ausschließlich das Altglas der mindestens einen gröberen Fraktion ("Grobglas") nach dem Aussondern mindestens eines Teils der glasfremden Verunreinigungen der Brechvorrichtung zuführt und anschließend das auf die gewünschte Scherbengröße zerkleinerte Altglas mindestens einer mechanischen Trennvorrichtung für das Aussondern restlicher metallischer Verunreinigungen und schließlich einer Lagerstelle für Gutglas zuführt und

b) das Altglas der mindestens einen feineren Fraktion ("Feinglas") nach dem Aussondern mindestens eines Teils der glasfremden Verunreinigungen ohne weiteren Brechvorgang einer mechanischen Trennvorrichtung für das Aussondern restlicher metallischer Verunreinigungen und schließlich einer Lagerstelle für Gutglas zuführt.

2. Verfahren nach Anspruch 1, dadurch gekennzeichnet, daß ausschließlich das Altglas der gröbsten Fraktion der Brechvorrichtung zugeführt wird.

3. Verfahren nach Anspruch 1, dadurch gekennzeichnet, daß das Altglas der mindestens einen gröberen Fraktion ("Grobglas") während des kontinuierlichen Transports auf der nach oben offenen Fördereinrichtung unter einem Magnetabscheider und durch eine visuelle Beobachtungsstation hindurch bewegt, nachfolgend der Brechvorrichtung zuführt und das zerkleinerte Altglas einer Absaugstation und einem weiteren Magnetabscheider sowie mindestens einer Abscheidestation für Restmetalle und schließlich der Lagerstelle für Gutglas zuführt.

4. Verfahren nach Anspruch 1, dadurch gekennzeichnet, daß man das Altglas der mindestens einen feineren Fraktion ("Feinglas") einer Absaugstation, einem Magnetabscheider und nachfolgend während des kontinuierlichen Transports auf der nach oben offenen Fördereinrichtung durch eine visuelle Beobachtungsstation hindurchbewegt und wiederum anschliessend mindestens einer Abscheidestation für Restmetalle und schließlich der Lagerstelle für Gutglas zuführt.

5. Verfahren nach Anspruch 1, dadurch gekennzeichnet, daß man die Klassierung in die Fraktionen " Grobglas" und "Feinglas" mittels eines abgestuften Schwingsiebes durchführt,

a) dem das angelieferte Altglas über einen Aufwärtsförderer zugeführt wird und von dem

b) die klassierten Fraktionen mittels Überleitrutschen auf die im Niveau darunter liegenden, nach oben offenen Fördereinrichtungen weitergeleitet werden.

6. Vorrichtung zur Durchführung des Verfahrens nach Anspruch 1, mit mindestens einer kontinuierlich antreibbaren, nach oben offenen Fördereinrichtung, die durch mindestens eine Beobachtungsstation zum manuellen Aussondern von glasfremden Bestandteilen hindurchgeführt ist, mit mechanischen Abscheidestationen für glasfremde Verunreinigungen wie Eisen-und Nichteisenmetalle sowei für nichtmetallische Beimengungen sowie mit einer Brechvorrichtung für das mechanische Zerkleinern von Altglas und gegebenenfalls mit einer Klassierungsvorrichtung, dadurch gekennzeichnet, daß der mindestens einen Fördereinrichtung (15, 44) mit der zugehörigen Beobachtungsstation (17, 45) eine Trennvorrichtung (5) zur Klassierung des Altglases in mindestens zwei Fraktionen unterschiedlicher Teilegrößen vorgeschaltet ist, wobei

a) der Ausgang der Trennvorrichtung (5) für die mindestens eine gröbere Fraktion ("Grobglas") mit der nach oben offenen Fördereinrichtung (15) mit zugehöriger Beobachtungsstation (17) verbunden ist und das Abwurfende (15a) der Fördereinrichtung (15) der Brechvorrichtung (19) zugeordnet ist, deren Austragsöffnung (21) ihrerseits mit mindestens einer mechanischen Trennvorrichtung (Magnetabscheider 28, Abscheidestation 29) für das Aussondern restlicher metallischer Verunreinigungen verbunden ist, und wobei in Parallelschaltung hierzu

b) der Ausgang der Trennvorrichtung (5) für die mindestens eine feinere Fraktion ("Feinglas") mit einer weiteren, nach oben offenen Fördereinrichtung (44) mit zugehöriger Beobachtungsstation (45) verbunden ist, und das Abwurfende (44a) der weiteren Fördereinrichtung (44) mit mindestens einer weiteren mechanischen Abscheidestation (48) für das Aussondern restlicher metallischer Verunreinigungen verbunden ist.

7. Vorrichtung nach Anspruch 6, dadurch gekennzeichnet, daß die nach oben offene Transporteinrichtung (15) für die mindestens eine gröbere Franktion ("Grobglas") unterhalb eines Magnetabscheiders (16) und anschliessend durch die Beobachtungsstation (17) hindurch verläuft, daß die Austragsöffnung (21) der Brechvorrichtung (19) einer Transportrinne (22) zugeordnet ist, über der sich eine mit einem Abscheider (26) verbundene Saugdüse (24) befindet, und daß das Abwurfende (22a) der Transportrinne (22) einem weiteren Magnetabscheider (28) und mindestens einer weiteren Abscheidestation (29) für Restmetalle zugeordnet ist, von der eine weitere Transporteinrichtung (32) zu einer Lagerstelle (33) für Gutglas geführt ist.

8. Vorrichtung nach Anspruch 6, dadurch gekennzeichnet, daß der Ausgang der Trennvorrichtung (5) für die mindestens eine feinere Fraktion ("Feinglas") über eine Überleitrutsche (34) zunächst mit einer Transportrinne (35) verbunden ist, über der sich eine mit einem weiteren Abscheider (39) verbundene Saugdüse (37) befindet und daß das Abwurfende (35a) dieser Transportrinne (35) mit einem weiteren Magnetabscheider (41) verbunden ist, dessen einer Ausgang (43) für das "Feinglas" mit der nach oben offenen Transporteinrichtung (44) mit zugehöriger Beobachtungsstation (45) verbunden ist, wobei das Abwurfende (44a) dieser Transporteinrichtung (44) einer weiteren Transportrinne (46) zugeordnet ist, deren Abwurfende (46a) mit einer weiteren Abscheidestation (48) für Restmetalle in Verbindung steht, von wo eine wiederum weitere Transporteinrichtung (50) zu einer Lagerstelle (51) für Gutglas geführt ist.

9. Vorrichtung nach Anspruch 6, dadurch gekennzeichnet, daß von einem Vorratsbehälter (1) für das angelieferte Altglas ein Aufwärtsförderer (3) zu der Trennvorrichtung (5) für die Klassierung des Altglases in die mindestens zwei Fraktionen unterschiedlicher Teilegröße ("Grobglas" und "Feinglas") geführt ist, daß die besagte Trennvorrichtung (5) als mehrstufiges Schwingsieb ausgeführt ist und daß die Ausgänge der Trennvorrichtung (5) in Parallelschaltung über Überleitrutschen (14, 34) mit den im Niveau darunter liegenden, nach oben offenen Fördereinrichtungen (15, 44) verbunden sind.

**Claims**

1. Method of reclaiming glass from scrap glass by continuous delivery of scrap glass in a spread-out state to an upwardly open, continuously moving conveyor device, by manual and mechanical sorting of non-glass impurities, such as ferrous or non-ferrous metals as well as non-ferrous additives, by mechanical reduction of scrap glass in a breaking device and, if appropriate, sorting according to size of fragments, **characterised in that** at least prior to manual sorting and reduction in the breaking device sorting of scrap glass into at least two fractions of different fragment size is carried out in a separating means, and
   a) exclusively the scrap glass of at least one of the coarser fractions ("coarse glass") is delivered, after sorting at least a proportion of the non-glass impurities, to the breaking device, and that subsequently the scrap glass, which has been reduced to the desired fragment size, is delivered to at least one mechanical separating means for sorting remaining metallic impurities, and finally to a storage for good glass, and
   b) the scrap glass of at least one finer fraction ("fine glass") is delivered, after sorting at least a proportion of the non-glass impurities, without further breaking process to a mechanical separating means for sorting remaining metallic impurities, and finally to a storage for good glass.

2. Method according to claim 1, **characterised in that** that exclusively scrap glass of the coarsest fraction is delivered to the breaking device.

3. Method according to claim 1, **characterised in that** the scrap glass of at least one coarser fraction ("coarse glass") moves during the continuous transport on the upwardly open conveyer device under a magnetic separator and through a visual observation station, is then delivered to the breaking device, and the reduced scrap glass is delivered to a suction station and to a further magnetic separator as well as to at least one separating station for metal remnants, and finally to the storage for good glass.

4. Method according to claim 1, **characterised in that** the scrap glass of at least one finer fraction ("fine glass") is transported to a suction station, a magnetic separator and then, during the continuous transport on the upwardly open conveyer, through a visual observation station, and then again through at least one sorting station for metal remnants and finally to the storage for good glass.

5. Method according to claim 1, **characterised in that** sorting into the fractions "course glass" and "fine glass" is carried out by means of a stepped oscillating sieve,
   a) which is fed supplied scrap glass via an upward conveyor, and from where
   b) the sorted fractions are passed on by means of transfer chutes to the upwardly open conveyer devices which are at a lower level.

6. Device for carrying out the method according to claim 1, comprising at least one continuously driven, upwardly open conveyer device, which passes through at least one observation station for manual sorting of non-glass fractions, mechanical separating stations for non-glass impurities such as ferrous and non-ferrous metals as well as non-metallic additives, as well as a breaking device for mechanical reduction of scrap glass and, if appropriate, a sorting device, **characterised in that** the at least one conveyer device (15, 44) with associated observation station (17, 45) is on the intake side connected to a separating device (5) for sorting scrap glass into at least two fractions of different fragment sizes, in which respect

    a) the outlet of the separating device (5) for the at least one coarser fraction ("coarse glass") is connected to the upwardly open conveyer device (15) with associated observation station (17), and the discharge end (15a) of the conveyer device (15) is associated with the breaking device (19), the outlet opening (21) of which is connected to at least one mechanical separating means (magnetic separator 28, separating station 29) for separating remaining metallic impurities, and in which respect in parallel

    b) the outlet of the separating device (5) for the at least one fine fraction ("fine glass") is connected to a further upwardly open conveyer device (44) with associated observation station (45), and the discharge end (44a) of the additional conveyer device (44) is connected to at least one further mechanical separating station (48) for sorting remaining metallic impurities.

7. Device according to claim 6, **characterised in that** the upwardly open conveyer device (15) for the at least one coarser fraction ("coarse glass") passes under a magnetic separator (16) and then through the observation station (17), that the outlet opening (21) of the breaking device (19) is associated to a transport channel (22) above which is positioned a suction nozzle (24) which is connected to a separator (26), and that the discharge end (22a) of the transport channel (22) is associated with a further magnetic separator (28) and at least one further separating station (29) for metal remnants, from where an additional transport device (32) connects to a storage (33) for good glass.

8. Device according to claim 6, **characterised in that** the outlet of the separating device (5) for the at least one further fraction ("fine glass") is initially connected via a transfer chute (34) to a transport channel (35), above which is located a suction nozzle (37) which is connected to a further separator (39), and that the discharge end (35a) of this transport channel (35) is connected to a further magnetic separator (41), the one outlet (43) of which for the "fine glass" is connected to the upwardly open transport device (44) with associated observation station (45), in which respect the discharge end (44a) of this transport device (44) is associated with a further transport channel (46), the discharge end (46a) of which is connected to a further separating station (48) for metal remnants, from where again a further transport device (50) connects to a storage (51) for good glass.

9. Device according to claim 6, **characterised in that** an upward conveyer (3) connects from a storage (1) for delivered scrap glass to the separating device (5) for sorting the scrap glass into at least two fractions of different fragment size ("coarse glass" and "fine glass"), that the said separating device (5) is a multi-step oscillating sieve and that the outlets of the separating device (5) are connected in parallel via the transfer chutes (14, 34) to the upwardly open conveyer drives (145, 44), located at a lower plane.

**Revendications**

1. Procédé de récupération du verre à partir de verre usagé par apport continu du verre usagé, à l'état étalé, sur un dispositif de transport ouvert vers le haut et avançant en continu, par un tri, manuel et mécanique, des impuretés étrangères au verre, comme des métaux ferreux et non-ferreux ainsi que des impuretés non-métalliques, par broyage mécanique du verre usagé dans un dispositif de broyage et éventuellement classement selon dimension des débris, procédé caractérisé par le fait qu'au moins avant le tri manuel et avant le broyage dans le dispositif de broyage, on procède, dans un dispositif de séparation, à un classement du verre usagé en au moins deux fractions de dimensions de morceaux différentes et

    a) on amène exclusivement au dispositif de broyage le verre usagé de la fraction plus grossière ("verre grossier"), dont il y a au moins une, après le tri d'au moins une partie des impuretés étrangères au verre et on amène ensuite le verre usagé, broyé à la dimension de débris désirée, à au moins un dispositif de séparation mécanique pour le tri des impuretés métalliques restantes et enfin on l'amène à un poste de stockage pour le verre utilisable et

    b) on amène le verre usagé de la fraction plus fine ("verre fin"), dont il y a au moins une, après le tri d'au moins une partie des impuretés étrangères au verre, sans autre processus de broyage, à un dispositif de séparation mécanique pour le tri des impuretés métalliques restantes et enfin on l'amène à un poste de stockage pour le verre utilisable.

2. Procédé selon la revendication 1, caractérisé par le fait que l'on amène au dispositif de broyage exclusivement le verre usagé de la fraction la plus grossière.

3. Procédé selon la revendication 1, caractérisé par le fait que, pendant son transport continu sur le dispositif de transport ouvert vers le haut, on fait passer le verre usagé de la fraction plus grossière ("verre grossier"), dont il y a au moins une, sous un séparateur magnétique et à travers une station d'observation visuelle, puis qu'on l'amène au dispositif de broyage et que l'on amène le verre usagé, broyé, à une station d'aspiration et à un autre séparateur magnétique ainsi qu'à au moins une station de séparation pour les métaux restants et enfin au poste de stockage pour le verre utilisable.

4. Procédé selon la revendication 1, caractérisé par le fait que l'on amène le verre usagé de la fraction plus fine ("verre fin"), dont il y a au moins une, à une station d'aspiration, à un séparateur magnétique et ensuite, pendant son transport continu sur le dispositif de transport ouvert vers le haut, on le fait passer à travers une station d'observation visuelle et qu'on l'amène ensuite à nouveau à au moins une station de séparation pour les métaux restants et enfin au poste de stockage pour le verre utilisable.

5. Procédé selon la revendication 1, caractérisé par le fait que l'on procède au classement en les fractions "verre grossier" et "verre fin" au moyen d'un crible vibrant étagé,
    a) auquel on amène le verre usagé livré par l'intermédiaire d'un transporteur-élévateur et d'où
    b) les fractions classées poursuivent, au moyen de goulottes de transfert, sur les dispositifs de transport situés au niveau inférieur et ouverts vers le haut.

6. Installation pour la mise en oeuvre du procédé selon la revendication 1, comportant au moins un dispositif de transport qui peut être entraîné en continu, qui est ouvert vers le haut et qui passe à travers au moins une station d'observation pour le tri manuel des composants étrangers au verre, comportant aussi des stations de séparation mécanique pour les impuretés étrangères au verre, comme les métaux ferreux et non-ferreux, ainsi que pour les impuretés non-métalliques, et comportant aussi un dispositif de broyage pour le broyage mécanique du verre usagé et éventuellement un dispositif de classement, installation caractérisée par le fait qu'en amont des dispositifs de transport (15, 44), dont il y a au moins un, avec la station d'observation correspondante (17, 45), est installé un dispositif de séparation (5) pour classer le verre usagé en au moins deux fractions de dimensions des morceaux différentes, étant précisé que
    a) la sortie du dispositif de séparation (5) pour la fraction grossière ("verre grossier"), dont il y a au moins une, est reliée au dispositif de transport (15), ouvert vers le haut, avec la station d'observation correspondante (17), et l'extrémité de décharge (15a) du dispositif de transport (15) correspond au dispositif de broyage (19) dont l'ouverture de sortie est, de son côté, reliée à au moins un dispositif de séparation mécanique (séparateur magnétique (28, station de séparation 29) pour le tri des impuretés métalliques restantes, et étant précisé que, dans un montage parallèle à celui-ci,
    b) la sortie du dispositif de séparation (5) pour la fraction plus fine ("verre fin"), dont il y a au moins une, est reliée à un autre dispositif de transport (44), ouvert vers le haut, avec une station d'observation correspondante (45), et l'extrémité de décharge (44a) de l'autre dispositif de transport (44) est reliée avec au moins une autre station de séparation mécanique (48) pour le tri des impuretés métalliques restantes.

7. Installation selon la revendication 6, caractérisée par le fait que le dispositif de transport (15), ouvert vers le haut, pour la fraction plus grossière ("verre grossier"), dont il y a au moins une, passe en dessous d'un séparateur magnétique (16), puis à travers la station d'observation (17), par le fait que l'ouverture de sortie (21) du dispositif de broyage (19) correspond à un couloir de transport (22) par-dessus lequel se trouve une buse d'aspiration (24) reliée à un séparateur (26), et par le fait que l'extrémité de décharge (22a) du couloir de transport (22) correspond à un autre séparateur magnétique (28) et à au moins une autre station de séparation (29) pour les métaux restants, d'où un autre dispositif de transport (32) va à un poste de stockage (33) pour le verre utilisable.

8. Installation selon la revendication 6, caractérisée par le fait que la sortie du dispositif de séparation (5) pour la fraction plus fine ("verre fin"), dont il y a au moins une, est tout d'abord reliée, par l'intermédiaire d'une goulotte de transfert (34), avec un couloir de transport (35) au-dessus duquel se trouve une buse d'aspiration (37) reliée à un autre séparateur (39), et par le fait que l'extrémité de décharge (35a) de ce couloir de transport (35) est reliée à un autre séparateur magnétique (41) dont une sortie (43) pour le "verre fin" est reliée avec le dispositif de transport (44) ouvert vers le haut avec station d'observation correspondante (45), étant précisé que l'extrémité de décharge (44a) de ce dispositif de transport (44) correspond à un autre couloir de transport (46) dont l'extrémité de décharge (46a) est reliée avec une autre station de séparation (48) pour les métaux restants, d'où, à nouveau, un autre dispositif de transport (50) va à un poste de stockage (51) pour le verre utilisable.

9.  Dispositif selon la revendication 6, caractérisé par le fait que, depuis une trémie de stockage (1) pour le verre usagé livré, un transporteur élévateur (3) va au dispositif de séparation (5) pour le classement du verre usagé en les fractions, dont il y a au moins deux, de dimensions des morceaux différentes ("verre grossier" et "verre fin"), par le fait que ledit dispositif de séparation (5) est réalisé sous forme d'un crible vibrant à plusieurs étages et par le fait que les sorties du dispositif de séparation (5) sont reliées, en montage parallèle, par l'intermédiaire de goulottes de transfert (14, 34), avec les dispositis de transport (15, 44) situés au niveau inférieur et ouverts vers le haut.

FIG.1

FIG.1

FIG.2

FIG. 1

FIG. 3